# EUROPEAN PATENT SPECIFICATION

(11) **EP 2 213 180 B1**
(45) Date of publication and mention of the grant of the patent: **11.07.2018**
(21) Application number: 08842606.9
(22) Date of filing: 24.10.2008
(51) Int. Cl.: A23L 2/00, B01F 1/00, B01F 3/04

(54) **METHOD FOR PRODUCING CARBONATED BEVERAGES**
VERFAHREN ZUR HERSTELLUNG EINES KOHLENSÄUREHALTIGEN GETRÄNKS
PROCÉDÉ DE PRODUCTION D'UNE BOISSON CARBONÉE

(30) Priority: 25.10.2007 JP 2007277390
(43) Date of publication of application: 04.08.2010
(73) Proprietor: Suntory Holdings Limited, Kita-ku, Osaka-shi Osaka 530-8203 (JP)
(72) Inventor: SETA, Harumichi, Tokyo 135-8631, (JP); MATSUBARA, Hitoshi, Tokyo 135-8631, (JP); KATAYAMA, Yuki, Kanagawa 211-0067 (JP)
(74) Representative: Vossius & Partner Patentanwälte Rechtsanwälte mbB
(86) International application number: PCT/JP2008/069303
(87) International publication number: WO 2009/054481

(56) References cited:
- GB-A- 1 534 361
- JP-A- 2001 058 142
- JP-A- 2003 117 368
- JP-A- 2003 126 665
- JP-A- 2003 181 258
- JP-A- 2006 320 675
- JP-A- 2007 000 771
- JP-A- 2008 063 236
- JP-A- 2008 156 320
- JP-T- 2002 503 266
- US-A- 5 842 600
- KONSO RYU NIHON KONSO RYU GAKKAI vol. 18, no. 3, 2004, pages 197 - 204, XP008171813

## Description

### TECHNICAL FIELD

The present invention relates to a method for producing so-called carbonated beverages such as carbonated water and shochu- or distilled spirit-based carbonated beverages. In particular, the present invention relates to a method for producing carbonated beverages retaining sparkling characteristics for many minutes and having quality characteristics with fine and smooth feeling of bubbles in drinking.

### BACKGROUND ART

A typical current process for commercially producing bottled carbonated beverages includes a step of mixing a raw beverage and carbon dioxide in piping using a special mixer such as a carbonator available from Tuchenhagen GmbH. (for example, Japanese Unexamined Patent Application Publication No. 7-509181). Another process includes, as described in Japanese Examined Patent Application Publication No. 8-2415, spraying a beverage in a tank filled with carbon dioxide, applying the beverage to multiple plates disposed in the tank, and forming thin films of the beverage on the plates such that the thin films absorb carbon dioxide efficiently. These processes have been conventionally used in production of carbonated beverages, but actually, the resultant commercially produced carbonated beverages have extremely undiversified sparkling characteristics on carbon dioxide.

Meanwhile, it has taken root in Europe from old times to drink beverages that are produced by drawing and bottling natural spring water i.e. mineral water. Since the beverages are spring water that gushes out from the deep inside of the ground, they contain natural carbon dioxide and have a wide variety of quality characteristics such as a palatable taste in drinking. In contrast, the quality of the carbonated water produced from industrially purified water by the commercial processes described above has disadvantages of large bubbles and rapid release of carbon dioxide.

In addition, sparkling wines such as those made in Champagne in France and Cava in Spain are produced by trapping carbon dioxide in bottles during secondary fermentation (traditional sparkling wine). These sparkling wines have been noted for superior sparkling characteristics on carbon dioxide, particularly fine bubbles and long retention times of carbon dioxide. There are evident differences in sparkling characteristics on carbon dioxide between these sparkling wines produced by secondary fermentation (traditional sparkling wine) and artificial carbonated wines commercially produced by the process described above. Specifically, the commercial sparkling wines have disadvantages of large bubbles and rapid release of carbon dioxide.

Furthermore, Japanese Unexamined Patent Application Publication No. 8-323171 discloses a process for producing a certain type of carbonated beverage. It shows that the carbonated beverage produced by the process has improved retention of dissolved carbon dioxide, but it does not refer to feeling on the bubbles of the resultant carbonated beverage in drinking.
Non-patent Literature 1 describes the measurement result of the sizes of CO₂ bubbles in various sparkling drinks.
Patent Literature 4 relates to a carbonated water production apparatus.
Patent Literature 5 describes the application of microbubbles by carbon dioxide.
Patent Literature 1: Japanese Unexamined Patent Application Publication No. 7-509181
Patent Literature 2: Japanese Examined Patent Application Publication No. 8-2415
Patent Literature 3: Japanese Unexamined Patent Application Publication No. 8-323171
Patent Literature 4: JP 2007-771A
Patent Literature 5: JP 2006-320675
Non-Patent-Literature 1: Konso Ryu, Vol. 18, No. 3, Nihon Konso Ryu Gakkai, 2004, p. 197-204

### DISCLOSURE OF THE INVENTION

### PROBLEMS TO BE SOLVED BY THE INVENTION

Accordingly, an object of the present invention is to provide a new method for producing a carbonated beverage having totally new quality characteristics, such as improved retention of carbon dioxide and palatable feeling of fine bubbles in drinking, unlike conventional commercially produced carbonated beverages.

### MEANS FOR SOLVING THE PROBLEMS

The inventors have extensively investigated processes for producing carbonated beverages based on the new ideas differing from conventional processes in order to eliminate these disadvantages, and have come up with a totally new process for producing a carbonated beverage including a step of making bubbles finer, and accomplished the present invention.

The present invention encompasses the following aspects:
(1) A method for producing a carbonated beverage comprising a step of feeding carbon dioxide to liquid for beverage use in a pressure vessel, the carbon dioxide is fed by means for generating fine bubbles of carbon dioxide, wherein the means is a micro/nano bubble generator which generates bubbles of less than 1 mm in each diameter, wherein the micro/nano bubble generator is disposed in the pressure vessel.
(2) The method according to aspect (1), wherein the micro/nano bubble generator has a swivel, ejector, or venturi mechanism.
(3) The method according to aspect (1), wherein the amount of the dissolved carbon dioxide in the carbonated beverage is 200 to 12000 pm.
(4) The method according to aspect (1), wherein the residual rate of the dissolved carbon dioxide in the carbonated beverage after the system is left to stand for 60 minutes at 20°C is 0.5 or more.
(5) An apparatus for producing a carbonated beverage, comprising:
   a pressure vessel for containing liquid for beverage use;
   a micro/nano bubble generator, which generates bubbles of less than 1 mm in each diameter, disposed in the pressure vessel;
   means for feeding carbon dioxide to the micro/nano bubble generator;
   a pipe extending from the pressure vessel to the micro/nano bubble generator for circulation of the liquid for beverage use; and
   means for liquid transfer disposed in the pipe.

### ADVANTAGES OF THE INVENTION

The method of the present invention can provide a carbonated beverage that has superior retention of carbon dioxide, generates fine bubbles, and has quality characteristics quite differing from carbonated beverages produced by conventional processes.
In addition, the method of the present invention can provide a carbonated beverage retaining sparkling characteristics for many minutes and having stronger feeling of bubbles in drinking.

### BRIEF DESCRIPTION OF THE DRAWINGS

Fig. 1 is a schematic view of an apparatus for carrying out the method of the present invention.
Fig. 2 is a pair of graphs each showing temporal changes of the amount of dissolved carbon dioxide and the residual rate of dissolved carbon dioxide according to the carbonated water produced in Example 1 and Comparative Example 1.

### EXPLANATION OF THE REFERENCE NUMERALS

(1): carbon dioxide cylinder; (2): micro/nano bubble generator; (3): pressure vessel; (4): liquid for beverage use; (5): pressure resistant pump; (A): level of liquid for beverage use; V1: valve 1; V2: valve 2; V3: valve 3; V4: valve 4; V5: valve 5; V6: valve 6; PI1: manometer 1; PI2: manometer 2; PI3: manometer 3; PI4: manometer 4; PI5: manometer 5; FI1: flowmeter 1; FI2: flowmeter 2; Tl: thermometer; L1: pipe 1; L2: pipe 2. BEST MODE FOR CARRYING OUT THE INVENTION

The carbonated beverage obtainable by the method of the present invention includes beverages, such as carbonated water, and soft drinks and alcohol beverages containing carbon dioxide, to which carbon dioxide is artificially dissolved at any stage in their production processes.

The method of the present invention includes
a step of feeding carbon dioxide into liquid for beverage use by means for generating fine bubbles of carbon dioxide in a pressure vessel.

Any micro/nano bubble generator which creates bubbles of less than 1 mm in each diameter can be employed without restriction as means for feeding fine bubbles of carbon dioxide into liquid for beverage.

Furthermore, the means for feeding bubbles of less than 1 mm in each diameter include not only means that can feed bubbles all having a diameter of less than 1 mm, but also means that can feed bubbles of which at least 50% (or 80%) has a diameter of less than 1 mm.

The means for generating fine bubbles is an apparatus known as a micro/nano bubble generator, which can generate fine bubbles of less than 1 mm in each diameter. The micro/nano bubble generator used in the method according to the present invention is disposed in the pressure vessel. The micro/nano bubble generators are classified into swivel, ejector, and venturi types depending on the bubble generation mechanism, any type of which can be used in the present invention.

An example of the micro/nano bubble generator is "Aurajet (trade name)", which is commercially available from Aura Tech Corp. Furthermore, Japanese Unexamined Patent Application Publication Nos. 2003-126665, 2001-58142, 2003-117368, and 2003-181258 disclose such types of apparatuses. In the present invention, any type of micro/nano bubble generator may be appropriately selected for use depending on, for example, the amount, properties such as gas pressure, and type of the carbonated beverage to be produced.

Furthermore, the pressure, the rate of supply, and the amount of carbon dioxide to be fed into liquid for beverage use may be appropriately adjusted depending on, for example, the amount, properties such as gas pressure, and type of the carbonated beverage to be produced.

Any liquid suitable for beverage use may be used without restriction in the present invention. Examples of the liquid for beverage use include natural water and processed water containing ingredients such as a sweetener, acidulant, flavor, and alcohol. Also usable liquids are alcohols such as whisky, shochu (distilled spirit), other spirits, wine and beer, and intermediate materials thereof.

The method according to the present invention may be carried out, for example, using an apparatus that includes a pressure vessel for containing liquid for beverage use, a micro/nano bubble generator, which generates bubbles of less than 1 mm in each diameter, disposed in the pressure vessel, means for feeding carbon dioxide to the micro/nano bubble generator, a pipe extending from the pressure vessel to the micro/nano bubble generator for circulation of the liquid for beverage use, and means for liquid transfer disposed in the pipe. Fine bubbles of carbon dioxide are fed into the liquid for beverage use that has been introduced to the pressure vessel disposed in the apparatus, via the means for feeding carbon dioxide (for example, a carbon dioxide cylinder) and the micro/nano bubble generator. The liquid for beverage use contained in the pressure vessel can be circulated to the micro/nano bubble generator during the supply of carbon dioxide. The circulation can be carried out by the means for liquid transfer disposed in the pipe (for example, a pressure resistant pump) via the pipe extending from the pressure vessel to the micro/nano bubble generator.

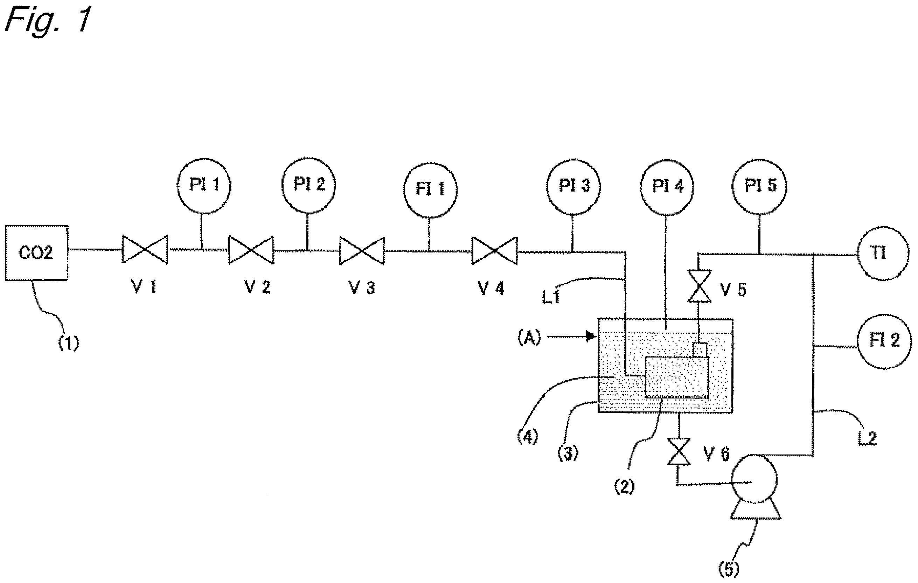

The method according to an aspect of the present invention can be carried out, for example, using an apparatus shown as a schematic view in Fig. 1. In Fig. 1, reference numeral (1) represents a carbon dioxide cylinder, reference numeral (2) represents a micro/nano bubble generator, reference numeral (3) represents a pressure vessel, reference numeral (5) represents a pressure resistant pump, and reference numeral (4) represents liquid for beverage use, which is contained at a level (A) in the pressure vessel. In addition, symbols PI, FI, TI, and V represent a manometer, a flowmeter, a thermometer, and a valve, respectively. Carbon dioxide is fed to the micro/nano bubble generator through a pipe (L1) that extends from the carbon dioxide cylinder to the the micro/nano bubble generator via a valve 1 (V1) to a valve 4 (V4). A pipe (L2) extends from the bottom of the pressure vessel to the micro/nano generator via a valve 6 (V6), the pressure resistant pump, and a valve 5 (V5) and is disposed for circulation of the liquid for beverage use, which is circulated in the direction from the valve 6 to the valve 5 by the pressure resistant pump. The pressure in the pressure vessel can be measured with a manometer 4 (PI4). In addition, the temperature of the liquid for beverage use can be measured with a thermometer (TI) disposed in the pipe (L2). Any means for adjusting the temperature of the liquid for beverage use (not shown in Fig. 1), for example a cooling jacket or a heat exchanger, can be disposed in the pressure vessel and/or the pipe (L2).

The apparatus shown in Fig. 1 is a non-limiting example of the apparatus for carrying out the present invention. Furthermore, the number and the position of the manometers, flowmeters and pipes are shown in Fig. 1 for illustrative purposes, which may be appropriately modified if required.

An embodiment of the method for producing carbonated beverages using the apparatus shown in Fig. 1 will be described below.

First, liquid for beverage use is introduced into a pressure vessel, and the lid of the vessel is closed to seal the vessel. The liquid for beverage use may be precooled at 2°C to 5°C. Alternatively, the liquid for beverage use may be cooled at 2°C to 5°C by, for example, a cooling jacket after being introduced into the pressure vessel.

Since the solubility of carbon dioxide increases as the temperature of the liquid for beverage decreases, the temperature of the liquid for beverage use is preferably maintained at 2°C to 5°C during the supply of carbon dioxide to the liquid for beverage use.

Second, a pressure resistant pump (5) is activated to start circulation of the liquid for beverage use, while carbon dioxide is fed through a pipe (L1). Fine bubbles of carbon dioxide are thereby fed into the liquid for beverage use from a micro/nano bubble generator (2). The fed carbon dioxide is dissolved in the liquid for beverage use under pressure, to produce a carbonated beverage after a certain period of time.

Conditions such as the amount of carbon dioxide to be supplied, the amount of the liquid for beverage use to be circulated, the pressure in the pressure vessel, and the operating time of the apparatus may be appropriately adjusted depending on the type and properties, such as gas pressure, of the target carbonated beverage. Furthermore, carbonated beverages with various ranges of gas pressure may be produced depending on the selection of, for example, the amount of carbon dioxide to be supplied, the amount of the liquid for beverage use to be supplied, the pressure in the pressure vessel, and the operating time of the apparatus.

The method of the present invention can provide carbonated beverages having a wide range of concentrations (for example, 200 to 12000 ppm) of originally dissolved carbon dioxide. Furthermore, with the carbonated beverages produced by the method of the present invention, the amount of released carbon dioxide from the beverages, after the system is left open, is less than that of the carbonated beverages produced by the conventional processes. This shows excellent retention of dissolved carbon dioxide. For example, in case of a carbonated beverage produced by the method of the present invention containing 5000 to 12000 ppm of originally dissolved carbon dioxide, the residual rate of dissolved carbon dioxide after the system is left to stand for 60 minutes at 20°C is, for example, higher than 0.4, or 0.5. The residual rate can be measured by the process described in Examples below (Measurement of the Temporal Change in Dissolved Carbon Dioxide).

### EXAMPLES

The present invention will be more specifically described with reference to the following non-limiting Examples.

### [Example 1]

A carbonated beverage was produced using an apparatus shown in Fig. 1.

### (i) Apparatus

A micro/nano bubble generator (trade name: Aurajet; commercially available from Aura Tech Co. Ltd.) was disposed within a cylindrical pressure vessel (internal volume: 20 L; height: 42 cm; diameter: 24 cm) including a cooling jacket, such that a bubble injection nozzle (circular nozzle of 1 cm in diameter) on the opposite plane to a plane having a pipe that extends from a carbon dioxide cylinder resided at a height 19 cm from the inner bottom of the pressure vessel.

### (ii) Production of Carbonated Beverage

To the pressure vessel was added 15 L of ion-exchange water as liquid for beverage use. Cooling brine (3°C) was then circulated in the cooling jacket (0.5 hour) to cool the deionized water to 5°C.

After cooling, a pressure resistant pump was activated to circulate the deionized water (flow rate: 18 L/min.), while carbon dioxide was fed to the micro/nano bubble generator (flow rate: 2 L/min.; pressure: 0.1 MPa). Fine bubbles of carbon dioxide were thereby fed into the deionized water. The operation of the pressure resistant pump and the supply of carbon dioxide were terminated when the inner pressure of the pressure vessel (the value of a manometer PI4 disposed on the top of the vessel) reached 0.1 MPa (after 0.5 hour). The liquid temperature (the value of a thermometer TI disposed in a circulation pipe L2) was controlled within the range of 5°C to 7°C during the procedure.

A carbonated beverage (herein carbonated water) was thereby produced. The pressure resistant pump was then removed from the pressure vessel, the resultant carbonated water was put into a 200 ml glass bottle while being maintained pressurized, and the bottle was sealed. The gas pressure of the resultant carbonated water was 0.2 MPa (2.3 kg/cm²) (20°C).

### [Comparative Example 1]

Deionized water and carbon dioxide were fed to an apparatus having three static mixers (commercially available from Noritake Co., Ltd.) connected in series (flow rate of deionized water: 10 L/min; flow rate of carbon dioxide: 25 L/min) to produce 50 L of carbonated beverage (carbonated water), which was then put into a 200 ml glass bottle while being maintained pressurized, and the bottle was sealed. The gas pressure of the resultant carbonated water was 0.2 MPa (20°C).

### [Evaluation]

### 1. Measurement of Temporal Changes in Dissolved Carbon Dioxide

The following operation was carried out at 20°C.

The glass bottles each containing the carbonated water produced in Example 1 or Comparative Example 1 were immersed in a constant-temperature bath at 20°C for 1 hour such that the carbonated water was maintained at a constant temperature. Each glass bottle was then opened, and 50 ml of the carbonated water was decanted therefrom into a plastic cup (cylindrical shape; diameter of cup mouth: 50 mm).

At a time when the carbonated water was decanted into the cup (0 min.), and in 2, 4, 8, 16, 30, 45, and 60 minutes thereafter, 2.8 ml of the carbonated water was collected from the cup with a pipette, and was decanted into a Falcon tube containing 0.2 ml of aqueous solution of sodium hydroxide (6M) (prepared from 12 g of sodium hydroxide and 50 ml of ultra-pure water), and the Falcon tube was shaken gently twice. The carbon dioxide dissolved in the carbonated water was thereby converted into Na₂CO₃ and NaHCO₃.

Next, the resultant solution (10 µL) was introduced into a high performance liquid chromatograph under the following conditions and the amount of H₂CO₃ converted from Na₂CO₃ and NaHCO₃ was determined.

### <Conditions for High Performance Liquid Chromatography>

Equipment: Carboxylic acid analysis system, commercially available from Shimadzu Corp.;
Column: SPR-H (trade name), commercially available from Shimadzu Corp.;
Column Temperature: 40°C;
Run Time: 18 Minutes;
Mobile Phase: Aqueous solution of p-toluenesulfonic acid (4 mM);
Buffer: Mixed solution of aqueous solution of p-toluenesulfonic acid (4 mM) and aqueous solution of Bis-Tris (16 mM) containing EDTA (100 *µ*M);
Flow Rate of Mobile Phase: 0.8 mL/min;
Flow Rate of Buffer: 0.8 mL/min;
Detector: Conductometric detection

The amount of dissolved carbon dioxide in the carbonated water was indirectly determined from a calibration curve that was prepared using 0 ppm, 1000 ppm, 2000 ppm, 4000 ppm, 6000 ppm, and 8000 ppm sodium hydrogen carbonate solutions.

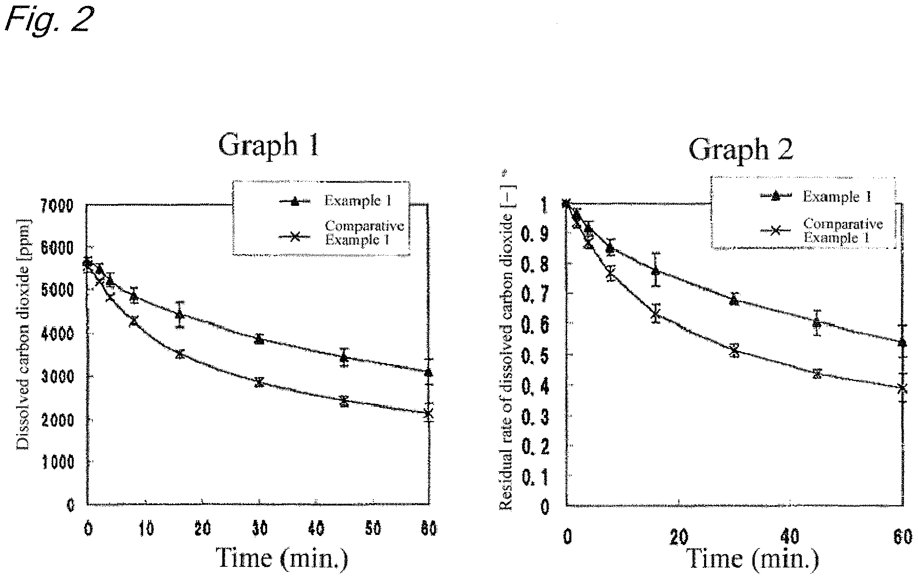

The run was repeated three times. The results of the measurements (average value of the three runs) are shown in Table 1 and Fig. 2.

**[Table 1]**

| | Example 1 | | Comparative Example 1 | |
|---|---|---|---|---|
| Time (min.) | Amount of dissolved carbon dioxide (ppm) | Residual rate of dissolved carbon dioxide | Amount of dissolved carbon dioxide (ppm) | Residual rate of dissolved carbon dioxide |
| 0 | 5690 | 1 | 5546 | 1 |
| 2 | 5500 | 0.97 | 5199 | 0.94 |
| 4 | 5226 | 0.92 | 4818 | 0.87 |
| 8 | 4855 | 0.85 | 4257 | 0.77 |
| 16 | 4420 | 0.78 | 3503 | 0.63 |
| 30 | 3870 | 0.68 | 2846 | 0.51 |
| 45 | 3438 | 0.60 | 2419 | 0.44 |
| 60 | 3088 | 0.54 | 2152 | 0.39 |

Graph 1 in Fig. 2 shows temporal changes in the amount of dissolved carbon dioxide, and Graph 2 shows temporal changes in the residual rate of dissolved carbon dioxide.

Table 1 and the graphs in Fig. 2 evidentially demonstrate that the carbonated water produced by the method of the present invention (Example 1) contains a larger amount of carbon dioxide compared to the carbon water produced by a conventional technique (Comparative Example 1) after being left for a certain time. Accordingly, the carbonated water produced by the inventive method has superior characteristics on retention of dissolved carbon dioxide.

### 2. Sensory Evaluation

Sensory Evaluation on the carbonated water produced in Example 1 and Comparative Example 1 was carried out by panelists. The results are shown in Table 2. In conclusion, the inventive method can successfully produce carbonated water generating fine bubbles, retaining sparkling characteristics for many minutes, and giving stronger feeling of bubbles beverage drinkers.

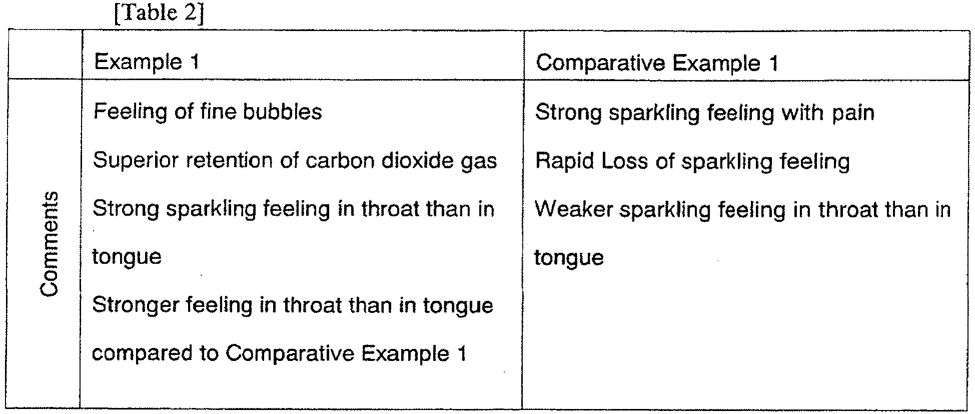

## Claims

1. A method for producing a carbonated beverage comprising the step of feeding carbon dioxide into liquid for beverage use (4) in a pressure vessel (3), wherein the carbon dioxide is fed by means for generating fine bubbles of carbon dioxide, **characterized in that** the means is a micro/nano bubble generator (2) which generates bubbles of less than 1 mm in each diameter, wherein the micro/nano bubble generator (2) is disposed in the pressure vessel (3).

2. The method according to claim 1, wherein the micro/nano bubble generator (2) has a swivel, ejector, or venturi mechanism.

3. The method according to claim 1, wherein the amount of the dissolved carbon dioxide in the carbonated beverage is 200 to 12000 ppm.

4. The method according to claim 1, wherein the residual rate of the dissolved carbon dioxide in the carbonated beverage after the system is left to stand for 60 minutes at 20°C is 0.5 or more.

5. An apparatus for producing a carbonated beverage, comprising:
a pressure vessel (3) for containing liquid for beverage use (4);
a micro/nano bubble generator (2), which generates bubbles of less than 1 mm in each diameter, disposed in the pressure vessel (3);
means for feeding carbon dioxide to the micro/nano bubble generator (2);
a pipe extending from the pressure vessel (3) to the micro/nano bubble generator (2) for circulation of the liquid for beverage use (4); and
means for liquid transfer disposed in the pipe.

## Patentansprüche

1. Ein Verfahren zur Herstellung eines kohlensäurehaltigen Getränks, umfassend den Schritt des Zuführens von Kohlendioxid zu einer Flüssigkeit zur Verwendung in Getränken (4) in ein Druckgefäß (3), wobei das Kohlendioxid mithilfe einer Vorrichtung zur Erzeugung von feinen Blasen von Kohlendioxid zugeführt wird, **dadurch gekennzeichnet, dass** die Vorrichtung ein Mikro-/Nanoblasengenerator (2) ist, der Blasen mit einer Größe von weniger als 1 mm in jedem Durchmesser erzeugt, wobei der Mikro-/Nanoblasengenerator (2) in dem Druckgefäß (3) angeordnet ist.

2. Das Verfahren nach Anspruch 1, wobei der Mikro-/Nanoblasengenerator (2) einen Schwenk-, Auswurf- oder Venturi-Mechanismus aufweist.

3. Das Verfahren nach Anspruch 1, wobei die Menge des gelösten Kohlendioxids in dem kohlensäurehaltigen Getränk 200 bis 12000 ppm beträgt.

4. Das Verfahren nach Anspruch 1, wobei der Restanteil des gelösten Kohlendioxids in dem kohlensäurehaltigen Getränk, nachdem das System für 60 Minuten bei 20°C stehen gelassen wurde, 0,5 oder mehr beträgt.

5. Eine Vorrichtung zur Herstellung eines kohlensäurehaltigen Getränks, umfassend:
ein Druckgefäß (3) zum Aufbewahren von Flüssigkeit zur Verwendung in Getränken (4);
einen Mikro-/Nanoblasengenerator (2), der Blasen mit einer Größe von weniger als 1 mm in jedem Durchmesser erzeugt, der in dem Druckgefäß (3) angeordnet ist;
eine Vorrichtung zum Zuführen von Kohlendioxid zu dem Mikro-/Nanoblasengenerator (2);
eine Leitung, die sich von dem Druckgefäß (3) bis zum Mikro-/Nanoblasengenerator (2) erstreckt, für die Zirkulation der Flüssigkeit, die in Getränken verwendet wird (4); und
eine Vorrichtung für den Flüssigkeitstransfer, die in der Leitung angeordnet ist.

## Revendications

1. Procédé de production d'une boisson carbonée comprenant l'étape de fourniture de dioxyde de carbone dans du liquide destiné à servir de boisson (4) dans un récipient sous pression (3), dans lequel le dioxyde de carbone est fourni par un moyen de génération de fines bulles de dioxyde de carbone, **caractérisé en ce que** le moyen est un générateur de micro/nano-bulles (2) qui génère des bulles de moins de 1 mm de diamètre chacune, dans lequel le générateur de micro/nano-bulles (2) est disposé dans le récipient sous pression (3).

2. Procédé selon la revendication 1, dans lequel le générateur de micro/nano-bulles (2) possède un mécanisme pivotant, éjecteur ou venturi.

3. Procédé selon la revendication 1, dans lequel la quantité du dioxyde de carbone dissous dans la boisson carbonée est de 200 à 12000 ppm.

4. Procédé selon la revendication 1, dans lequel le taux résiduel du dioxyde de carbone dissous dans la boisson carbonée après avoir laissé le système au repos pendant 60 minutes à 20 °C est de 0,5 ou plus.

5. Appareil de production d'une boisson carbonée, comprenant :
un récipient sous pression (3) pour contenir un liquide destiné à servir de boisson (4) ;
un générateur de micro/nano-bulles (2), qui génère des bulles de moins de 1 mm de diamètre chacune, disposé dans le récipient sous pression (3) ;
un moyen pour fournir du dioxyde de carbone au générateur de micro/nano-bulles (2) ;
un tuyau s'étendant du récipient sous pression (3) au générateur de micro/nano-bulles (2) pour circulation du liquide destiné à servir de boisson (4) ; et
un moyen de transfert de liquide disposé dans le tuyau.
